# EUROPEAN PATENT SPECIFICATION

(11) **EP 4 536 964 B1**
(45) Date of publication and mention of the grant of the patent: **06.05.2026**
(21) Application number: 23730155.1
(22) Date of filing: 16.05.2023
(51) Int. Cl.: F03G 7/08, E05B 63/20, E05B 47/00, E05C 19/04

(54) **ENERGY HARVESTING ARRANGEMENT FOR HARVESTING ENERGY FROM DOOR MOVEMENT**
ENERGIEGEWINNUNGSANORDNUNG ZUR GEWINNUNG VON ENERGIE AUS TÜRBEWEGUNG
AGENCEMENT DE COLLECTE D'ÉNERGIE POUR COLLECTER DE L'ÉNERGIE À PARTIR D'UN MOUVEMENT DE PORTE

(30) Priority: 07.06.2022 FI 20225495
(43) Date of publication of application: 16.04.2025
(73) Proprietor: Abloy Oy, 80100 Joensuu (FI)
(72) Inventor: SEPPÄNEN, Sauli, 80160 Joensuu (FI); KOSUNEN, Heikki, 80130 Joensuu (FI); SALLINEN, Petri, 80170 Joensuu (FI); SALLINEN, Kari, 80100 Joensuu (FI); KUKKONEN, Jarkko, 80100 Joensuu (FI)
(74) Representative: Berggren Oy
(86) International application number: PCT/FI2023/050273
(87) International publication number: WO 2023/237810

(56) References cited:
- EP-A2- 2 405 136
- GB-A- 2 479 157
- US-A1- 2013 293 067

## Description

Energy harvesting arrangement for harvesting energy from door movement

### Field of the invention

The invention relates to an energy harvesting arrangement for harvesting energy from door movement.

### Prior art

It is known to harvest energy from door movement. Different energy harvesting arrangements have been installed in connection with door hinges and locks. EP 2405136 presents one known solution, which has an electric counter iron. The door has a bolt. The electric counter iron can be controlled so that it allows opening of the door, whereby the bolt can get out from the connection with the counter iron. The controlling can also be used for locking the door, whereby the bolt cannot get out from the connection with the counter iron. The force of the door opening is controlled to move magnets in the counter iron, whereby the movement energy of the door can be harvested in an electromagnetic manner. The solution is thus in connection with the door locking.

Harvesting energy in connection with the door lock can however be challenging, because it affects the action sensitivity of the lock. If it is desirable to emphasize the harvesting of energy, the use of the lock and the opening and/or closing of the door can be laborious. On the other hand, if the opening or closing of the door is easy and convenient, very much energy cannot necessarily be harvested, or its harvesting is so minor that it is not seen as useful.

### Brief description of the invention

The object of the invention is to provide a new solution for harvesting energy from door movement, which also aims to reduce disadvantages from prior art. This is achieved in the manner presented in the independent claim. The dependent claims present different embodiments of the invention. The invention is based on the energy harvesting arrangement being a separate arrangement from the lock / locking of the door and the energy harvesting mechanical movement is arranged so that the opening of the door is as effortless as possible.

The energy harvesting arrangement according to the invention thus harvests energy from door movement. It comprises a counter plate 2 to be installed in a door frame and a harvesting unit 1 to be installed in a door. The counter plate 2 has an opening 5 and a bevel surface 4 by the opening. The harvesting unit 1 comprises a frame 10, which comprises a spring-loaded roller bolt 3 and a harvesting mechanism 8, which has a spring 9.

The roller bolt 3 comprises a roller 11, which is arranged to be against the bevel surface 4 when the counter plate 2 and harvesting unit 1 are installed in the door frame and door, and when the door is closed against the frame. Thus when opening the door, the roller 11 is arranged to move on the bevel surface 4 and at the same time the roller bolt 3 is arranged to move into the frame 10 and move the harvesting mechanism 8 and set the spring 9 of the harvesting mechanism.

The frame 10 further comprises a spring-loaded control wedge 6 and a holding lever 12. The control wedge 6 is arranged to be against the counter plate 2 when the harvesting unit 1 and counter plate 2 are installed in the door frame and door, and when the door is closed against the frame. Thus when opening the door, as the harvesting unit 1 moves away from the frame, the control wedge 6 is arranged to move out from the frame 10 and to enable the holding lever 12 to move into the holding position. In the holding position, the holding lever 12 is arranged to hold the roller bolt 3 in its position moved into the frame. When closing the door, the control wedge 6 is arranged to move into its position inside the frame as controlled by the counter plate 2, and as a response to the moving of the control wedge 6 inside the frame the holding lever 12 is arranged to move away from the holding position, allowing the roller bolt 3 to move out from the frame 10.

The frame 10 additionally comprises a release mechanism 13 for releasing the setting of the spring 9 of the harvesting mechanism and thus also for moving the harvesting mechanism 8. Said releasing of the release mechanism 13 is arranged to occur as a response to the movement of the roller bolt 3, control wedge 6 or holding lever 12, when the door is closed.

### List of figures

In the following, the invention will be described in more detail by means of the figures of the appended drawings, in which
- Figure 1: shows an example of an energy harvesting arrangement according to the invention,
- Figure 2: shows the arrangement according to figure 1,
- Figure 3: illustrates the arrangement according to the invention when the door is against the frame,
- Figure 4: illustrates the arrangement according to the invention when the opening of the door has begun,
- Figure 5: illustrates the arrangement according to the invention when the door is moving away from the frame,
- Figure 6: illustrates the arrangement according to the invention when the door has almost moved away from the connection with the frame and the counter plate,
- Figure 7: illustrates the arrangement according to the invention when the door has completely moved away from the connection with the frame and the counter plate,
- Figure 8: illustrates the arrangement according to the invention when the door is being closed against the frame and the counter plate,
- Figure 9: illustrates the arrangement according to the invention when the door is being closed against the frame and the counter plate, and the control wedge has already moved toward the harvesting unit,
- Figure 10: illustrates the arrangement according to the invention when the door has been closed against the frame and the counter plate,
- Figure 11: shows an example of another embodiment of a roller bolt,
- Figure 12: shows an example of parts of the harvesting unit when it is against the counter plate,
- Figure 13: shows an example of parts of the harvesting unit, when it is moved away from the counter plate as the door is opened,
- Figure 14: shows an example of parts of the harvesting unit, when the door is closed against the frame and the release mechanism has not yet released the set spring of the harvesting mechanism and
- Figure 15: shows an example of parts of the harvesting unit, when the door is closed against the frame and the release mechanism has released the set spring of the harvesting mechanism.

### Description of the invention

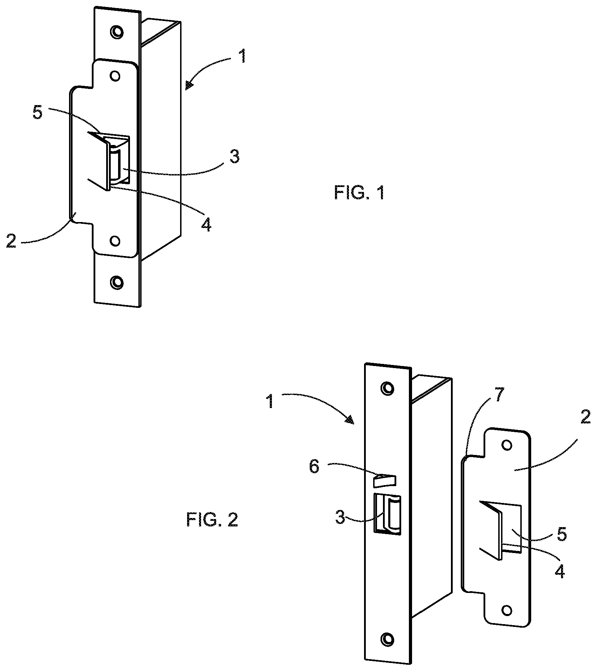

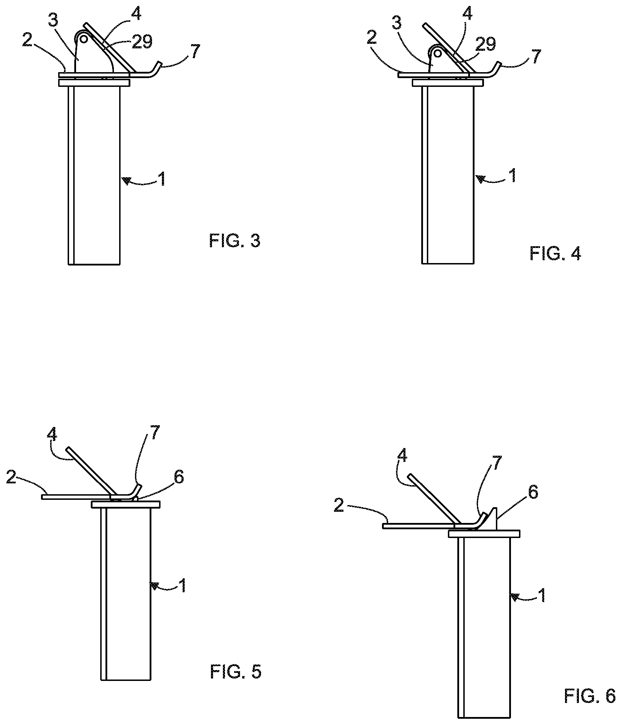

Figure 1 illustrates the arrangement according to the invention when the door is against the frame. The figure does not show the door or the door frame, as do also not the other figures in this presentation. For someone skilled in the art this is however clear. The counter plate 2 is a part to be installed in the door frame. The harvesting unit 1, on the other hand, is a part to be installed in the door. Figures 3, 10, 11, 12 and 15 show a situation corresponding to figure 1. Figure 2 illustrates the counter plate and harvesting unit apart from each other.

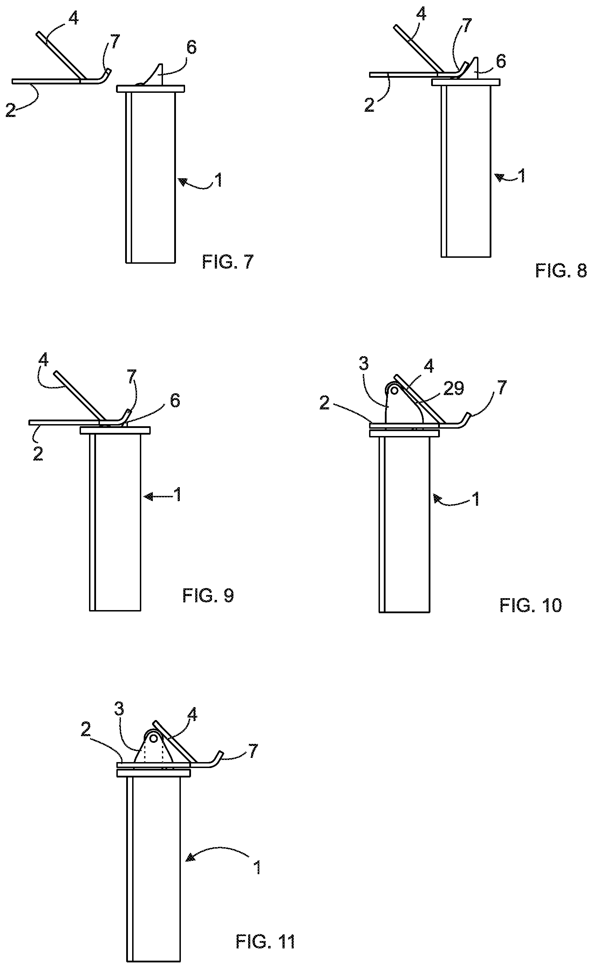

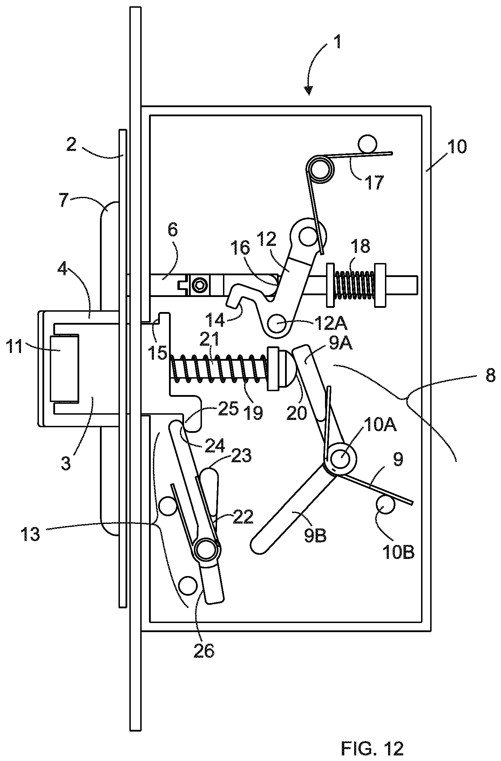

Figures 3 - 10 illustrate the operation of the invention seen from above. Figure 11 shows another embodiment of the roller bolt 3. Figures 12 - 15 also illustrate the function of the invention by showing parts of the harvesting unit in different situations.

The energy harvesting arrangement according to the invention thus harvests energy from door movement. It comprises a counter plate 2 to be installed in a door frame and a harvesting unit 1 to be installed in a door. The counter plate 2 has an opening 5 and a bevel surface 4 by the opening. Via the opening, the roller bolt comes into contact with the bevel surface, when the harvesting unit is against the counter plate, i.e. when the door is closed against the frame. The counter surface is thus by the opening and in a way on the bottom of the opening, when the counter plate is installed in the frame. The counter plate can also have a control protrusion 7, but it does not necessarily need to. From figures 1 - 2 is seen that both the counter plate and the harvesting unit has holes for attaching to the frame and door.

The harvesting unit 1 comprises a frame 10, which comprises a spring-loaded roller bolt 3 and a harvesting mechanism 8, which has a spring 9. See figures 12 - 15. The roller bolt 3 comprises a roller 11, which is arranged to be against the bevel surface 4 when the counter plate 2 and harvesting unit 1 are installed in the door frame and door, and when the door is closed against the frame, as shown for example in figure 3. Thus when opening the door, the roller 11 is arranged to move on the bevel surface 4 and at the same time the roller bolt 3 is arranged to move into the frame 10 and at the same time move the harvesting mechanism 8 and set the spring 9 of the harvesting mechanism.

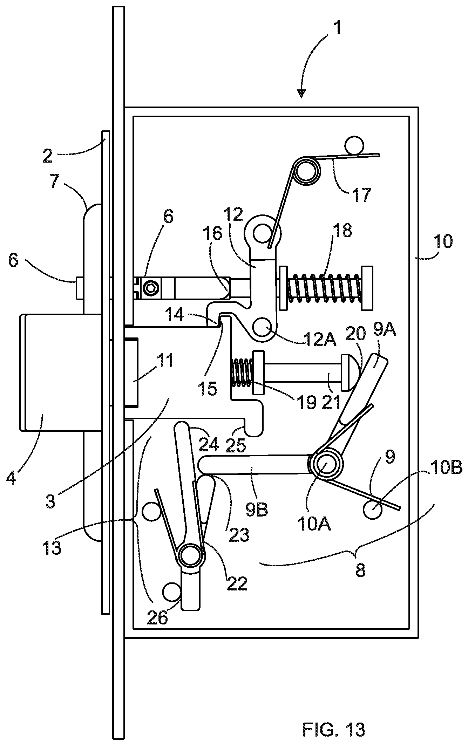

Figure 4 illustrates how the roller bolt 3 moves along the bevel surface 4, when the opening of the door has begun. In figure 5 the roller bolt has moved into the frame 10 of the harvesting unit 1, but the harvesting unit is still against the counter plate. Figure 12 shows the situation of the parts of the frame, when the harvesting unit 1 is against the counter plate 2. The spring 9 of the harvesting mechanism is not yet set by the movement of the roller bolt, which is achieved when the door is opened. Figure 13 shows a situation, where the door has been opened, whereby the roller bolt 3 has moved practically into the frame, i.e. into the position moved into the frame. Thus, the roller bolt 3 has moved the harvesting mechanism 8 and has set its spring 9.

The harvesting mechanism 8 thus is moved/moves when the roller bolt moves inside the frame 10, and at the same time the spring 9 of the harvesting mechanism is set. The figures show a simple embodiment of the harvesting mechanism, where the spring 9 is a torsional spring. In this embodiment the harvesting mechanism and its spring is swivel supported via the shaft point to the frame 10. The harvesting mechanism has two levers 9A, 9B. The second lever 9A is arranged to follow the roller bolt 3 moving into the frame 10 of the harvesting unit, whereby the opening movement of the door is controlled with the roller bolt to move (i.e. in this embodiment turn) the harvesting mechanism and set its spring 9. Energy from the opening of the door is thus harvested into the spring 9. The second lever 9B in turn is arranged to release energy harvested in the spring, which is described later.

In the embodiment of the figures, the spring 9 is supported on the shaft point 10A, on the second lever 9A and on the frame 10 by the support protrusion 10 B. The structure of the harvesting mechanism and the spring can also be implemented in other ways. The spring 9 can for example be a coil spring or a tension spring. The harvesting mechanism can be a plate-like structure, which has protrusions. The harvesting mechanism can also comprise gear surfaces or gear wheels.

The frame 10 further comprises a spring-loaded control wedge 6 and a holding lever 12. The control wedge 6 is arranged to be against the counter plate 2 when the harvesting unit 1 and counter plate 2 are installed in the door frame and door, and when the door is closed against the frame. Thus when opening the door, as the harvesting unit 1 moves away from the frame, the control wedge 6 is arranged to move out from the frame 10 and to enable the holding lever 12 to move into the holding position.

In figure 6 the control wedge 6 has just moved out from the frame 10 of the harvesting unit 1 without the counter plate 2 pushing it into the frame. In figure 7 there is a corresponding situation, but the harvesting unit 1 is completely separated from the counter plate 2. Figure 13 corresponds to the situation of figure 7.

In the holding position, the holding lever 12 is arranged to hold the roller bolt 3 in its position moved into the frame. The door could not be closed, if the roller bolt is out, when the door is open. The position of the roller bolt protruding from the frame (for example figures 3, 10 and 11) is such that it would prevent the closing of the door against the counter plate 2. The holding lever has a holding surface 14, which in the holding position is against a counter holding surface 15 of the roller bolt. The holding surface and the counter-holding surface can be implemented with protrusions and/or recesses. The holding lever is supported in a turning manner on the frame 10 by a shaft pin 12A.

In the embodiment of the figures, the control wedge 6 has a control surface 16, which keeps the holding lever away from the holding position, when the harvesting unit 1 is against the counter plate when the door is closed. Thus, the control wedge 9 is in the position moved into the frame, as shown in figure 12. When the door is opened, the control wedge moves out from the frame, when the harvesting unit moves away from the counter plate 2. When the control wedge moves, the movement (in this embodiment turning) of the holding lever 12 toward the holding position is also allowed. A torsional spring 17 is arranged in connection with the holding lever, which torsional spring is arranged to turn the holding lever 12 toward the holding position.

The mutual operation of the control wedge and the holding lever can also be arranged in another way. The torsional spring 17 can for example be arranged to turn the holding lever away from the holding position. Thus, the control surface 16 of the control wedge is implemented in a different way than in the figures, whereby it is arranged to move the holding lever 12 toward the holding position, when opening the door i.e. when the harvesting unit moves away from the counter plate.

From the figures can also be seen the springs 18, 19 of the spring-loaded roller bolt 3 and the spring-loaded control wedge, which springs are arranged to push the roller bolt and control wedge out from the frame 10. At the rear end of the roller bolt there is a moving surface 20, which is against the harvesting mechanism 8, when the door is opened and the roller bolt moves into the frame 10. Thus, the harvesting mechanism is moved and its spring 9 is set. The moving surface 20 can be arranged at the end of the pin section 21 in the roller bolt 3.

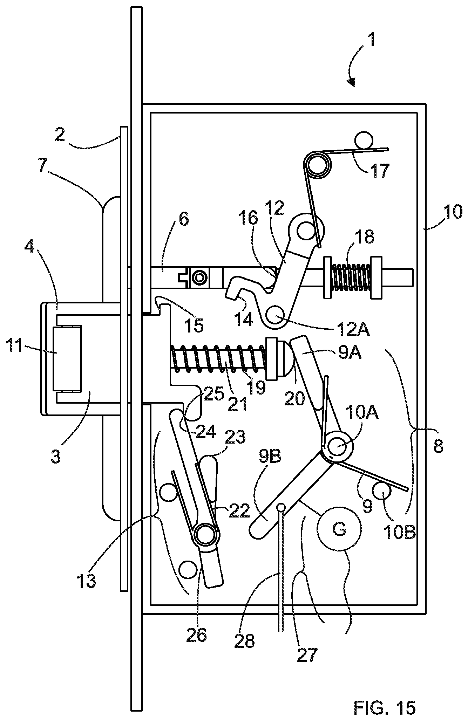

When closing the door, the control wedge 6 is arranged to move into its position inside the frame as controlled by the counter plate 2, and as a response to the moving of the control wedge 6 inside the frame the holding lever 12 is arranged to move away from the holding position, allowing the roller bolt 3 to move out from the frame 10. In figure 8 the end of the control wedge 6 is still out of the frame 10 and the counter plate 2 is just in contact with the control wedge. When the closing movement of the door continues, the counter plate guides the control wedge 6 into the frame. Figure 9 shows such a situation, where the control wedge is almost entirely guided into the frame 10 of the harvesting unit 1. Figure 10 shows a situation, where the holding lever 12 has moved away from the holding position, allowing the roller bolt 3 to move out from the frame 10. Figure 15 corresponds to this situation.

The frame 10 additionally comprises a release mechanism 13 for releasing the setting of the spring 9 of the harvesting mechanism and thus also for moving the harvesting mechanism 8. Said releasing of the release mechanism 13 is arranged to occur as a response to the movement of the roller bolt 3, control wedge 6 or holding lever 12, when the door is closed.

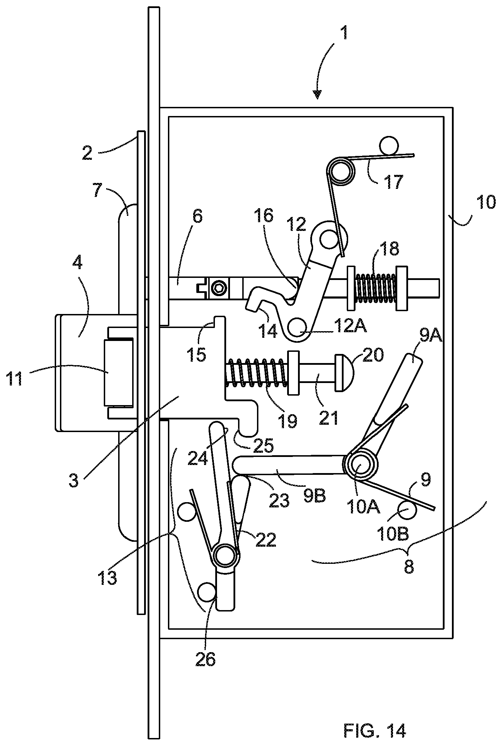

Figures 14 and 15 show the operation of the release mechanism 13. In the embodiment of the figures, the release mechanism is implemented with a torsional spring 22 and a lever system structure, which has a blocking surface 23 and a releasing surface 24. The blocking 23 prevents the harvesting mechanism 8 from moving (in the example of the figures turning) and the spring 9 set by the opening of the door from releasing. The blocking surface is thus against the harvesting mechanism, when the spring 9 is in a set state due to the opening of the door. See figure 13.

In order to utilize the energy harvested into the spring of the harvesting mechanism, the harvesting mechanism 8 must be released. This happens when the door is closed. In figure 14 the door is closed and thus the harvesting unit 1 is against the counter plate 2. The control wedge 6 has controlled / allowed the holding lever 12 to move away from the holding position (the holding position in figure 13), whereby the roller bolt 3 is moving outwards in the situation of figure 14. The spring 18 pushes the roller bolt 3 out from the frame 10, but the roller bolt has not yet had time to go completely into the protruding position. The blocking surface 23 is against the harvesting mechanism 8, in the embodiment of the figures against the second protrusion 9B. When the movement of the roller bolt continues outwards, the counter releasing surface 25 thereon meets the releasing surface 24, and when the movement of the roller bolt continues further outwards, its movement moves (in the embodiment of the figure turns) the release mechanism 13, whereby its blocking surface 23 moves out of the position where it is against the harvesting mechanism 8. Thus, the release mechanism 13 releases the setting of the spring 9 of the harvesting mechanism, and the energy harvested into the spring can be used in a desired manner. Figure 15 shows a situation, where the release mechanism has released the harvesting mechanism 8, and the energy harvested into the spring of the harvesting mechanism is guided into some use target.

In other words, the release mechanism 13 has a blocking surface 23 and a releasing surface 24. The blocking surface 23 is arranged to prevent the harvesting mechanism 8 from moving and the spring 9 of the harvesting mechanism set by the opening of the door from releasing, before the release mechanism moves as a response to the movement of the roller bolt 3, control wedge 6 or holding lever 12 (which movement is relayed to the releasing surface 24). Thus, the blocking surface 23 moves away from the position, where it is against the harvesting mechanism 8, and the set energy of the spring 9 is released.

From the figures can be seen that the counter releasing surface 25 of the roller bolt can be implemented with the protrusion in the roller bolt. The release mechanism can also be a motion limiter surface 26, with which the movement path of the release mechanism 13 in relation to the frame 10 is limited. The spring 22 is arranged to move the release mechanism toward a position, where it prevents the harvesting mechanism 8 from moving and the setting of its spring 9 from releasing. The release mechanism can be implemented also in other ways, such as with a plate structure. Also in these implementations, there is a blocking surface 23 and a releasing surface 24 and possibly also a motion limiter surface 26.

The releasing done with the release mechanism 13 is arranged to occur as a response to the movement/motion of the roller bolt 3 (shown in the figures), control wedge 6 or holding lever 12, when the door is closed. If the releasing occurs using the control wedge or holding lever, the counter surface 25 is implemented so that it is a solid part of the control wedge 6 or the holding lever 12, or it is in in connection with the control wedge or holding lever via a transfer mechanism.

The energy harvested into the spring 9 of the harvesting mechanism can be used in a desired manner. When the harvesting mechanism is released, the energy can be guided for example to a small generator for producing electricity. Electricity, in turn, can be guided into desired use. It can for example be used for electric functions of the lock, such as user/key recognition, to control an electric part (such as a solenoid or an electric motor) or to store the energy in a battery or capacitor (for example a supercapacitor). It is also possible that when releasing the energy harvested in the spring 9 of the harvesting mechanism, it is mechanically guided to some function of the lock, such as to move some locking element.

The energy harvesting arrangement according to the invention is a separate arrangement, but it can be combined for example with the door lock in order to use the harvested energy. The combining can be electric and/or mechanic. It can also be possible that the lock and the energy harvesting arrangement together form a bigger common complex. Figure 15 shows the combining of the energy harvesting arrangement in a sketch-like manner to some object of use, either electrically 27 or mechanically 28.

The energy harvesting arrangement according to the invention can thus comprise means 27, 28 for moving the energy harvested into the spring of the harvesting mechanism and released therefrom outside the energy harvesting arrangement either electrically or mechanically. Electric means can for example be a generator or electric wires 27 to be combined with the harvesting mechanism 8. Mechanic means can be for example a transfer rod 28 or a transfer lever system.

The energy harvesting arrangement according to the invention is arranged to harvest energy from the opening movement of a door. Energy is not harvested when closing the door. Thus, a structure can have been implemented, which works well when opening the door. A sufficient amount of energy can be harvested for it to be rational, and the opening of the door no still effortless for the user. The roller 11 easily moves against the bevel surface 4 of the counter plate. The diameter of the roller, the tilting of the bevel surface and the structure of the roller bolt 3 affect how much energy is harvested. The roller bolt structure can have a bevel surface 29 on one side of it, whereby stability is achieved in the roller bolt, and the structure does not prevent the roller bolt from moving on the bevel surface 4. The roller is at the tip of the bolt structure. A side of the roller bolt structure in this context means a slope, i.e. the wider side. The structure can be relatively narrow, as shown in figure 11 with dotted lines. It is also possible that the structure of the roller bolt has a bevel surface on both sides, such as shown in figure 11. These features also affect how effortlessly the door can be opened.

The invention can also be retrofitted. If the door lock or other device has an interface (electric or mechanic) for receiving energy from the energy harvesting arrangement according to the invention, retrofitting is inexpensive and also relatively effortless. It has above already been stated that there are different embodiments for implementing the invention.

In light of the examples above it is clear that the embodiment according to the invention can be achieved with many different solutions. The invention can thus be implemented with many different embodiments within the scope of the independent claim.

## Claims

1. An energy harvesting system for harvesting energy from door movement, **characterized in that** it comprises a counter plate (2) to be installed in a door frame and a harvesting unit (1) to be installed in a door, which counter plate (2) has an opening (5) and a bevel surface (4) by the opening, and which harvesting unit (1) comprises a frame (10), which comprises a spring-loaded roller bolt (3), and a harvesting mechanism (8), which has a spring (9),
which roller bolt (3) comprises a roller (11), which is arranged to be against the bevel surface (4) when the counter plate (2) and harvesting unit (1) are installed in the door frame and door, and when the door is closed against the frame, whereby when opening the door, the roller (11) is arranged to move on the bevel surface (4) and at the same time the roller bolt (3) is arranged to move into the frame (10) and move the harvesting mechanism (8) and set the spring (9) of the harvesting mechanism,
which frame (10) additionally comprises a spring-loaded control wedge (6) and a holding lever (12), which control wedge (6) is arranged to be against the counter plate (2) when the harvesting unit (1) and counter plate (2) are installed in the door frame and door, and when the door is closed against the frame, whereby when opening the door, as the harvesting unit (1) moves away from the frame, the control wedge (6) is arranged to move out from the frame (10) and enable the holding lever (12) to move into the holding position, in which position the holding lever (12) is arranged to keep the roller bolt (3) in its position moved into the frame, and when closing the door, the control wedge (6) is arranged to move into its position moved into the frame as guided by the counter plate (2), and as a response to the movement of the control wedge (6) into the frame, the holding lever (12) is arranged to move away from the holding position, allowing the roller bolt (3) to move out from the frame (10),
which frame (10) additionally comprises a release mechanism (13) to release the setting of the spring (9) and thus also to move the harvesting mechanism (8), said release of the release mechanism (13) is arranged to occur as a response to the movement of the roller bolt (3), control wedge (6) or holding lever (12), when the door is closed.

2. The energy harvesting arrangement according to claim 1, **characterized in that** the roller bolt (3) has a bevel surface (29) on one side of the roller bolt structure, or on both sides.

3. The energy harvesting arrangement according to claim 1 or 2, **characterized in that** the roller bolt has a moving surface (20), which is against the harvesting mechanism (8), when the energy harvesting arrangement is installed and the roller bolt moves into the frame (10) when the door is opened.

4. The energy harvesting arrangement according to claim 3, **characterized in that** the holding lever has a holding surface (14) and the roller bolt (3) has a counter holding surface (15), which holding surface in the holding position is against the counter holding surface of the roller bolt.

5. The energy harvesting arrangement according to claim 4, **characterized in that** the release mechanism (13) has a blocking surface (23) and a releasing surface (24), which blocking surface (23) is arranged to prevent the harvesting mechanism (8) from moving and the spring 9 of the harvesting mechanism set by the opening of the door from releasing, before the release mechanism moves as a response to the movement of the roller bolt 3, control wedge 6 or holding lever 12, which movement is relayed to the releasing surface 24, whereby the blocking surface 23 moves away from the position, where it is against the harvesting mechanism 8.

6. The energy harvesting arrangement according to any of the claims 3 - 5, **characterized in that** the harvesting mechanism (8) has two levers (9A, 9B), of which the first lever (9A) is arranged to follow the roller bolt moving into the frame (10) of the harvesting unit, whereby the opening movement of the door is controlled with the roller bolt (3) to move the harvesting mechanism and set its spring (9), and the second lever (9B) is arranged to release the energy harvested into the spring.

7. The energy harvesting arrangement according to claim 1 - 6, **characterized in that** it comprises means (27, 28) to move the energy harvested into the spring of the harvesting mechanism and released therefrom outside the energy harvesting arrangement either electrically or mechanically.

## Patentansprüche

1. Energiegewinnungssystem zur Gewinnung von Energie aus der Bewegung einer Tür, **dadurch gekennzeichnet, dass** es eine in einem Türrahmen anzubringende Gegenplatte (2) und eine in einer Tür anzubringende Gewinnungseinheit (1) umfasst, wobei die Gegenplatte (2) eine Öffnung (5) und eine an der Öffnung angeordnete abgeschrägte Oberfläche (4) aufweist und die Gewinnungseinheit (1) einen Rahmen (10) umfasst, der einen federbelasteten Rollriegel (3) umfasst, sowie einen Gewinnungsmechanismus (8), der eine Feder (9) aufweist,
wobei der Rollriegel (3) eine Rolle (11) umfasst, die so angeordnet ist, dass sie an der abgeschrägten Oberfläche (4) anliegt, wenn die Gegenplatte (2) und die Gewinnungseinheit (1) im Türrahmen und in der Tür installiert sind und wenn die Tür gegen den Rahmen geschlossen ist, wobei beim Öffnen der Tür die Rolle (11) so angeordnet ist, dass sie sich auf der abgeschrägten Oberfläche (4) bewegt, und gleichzeitig der Rollriegel (3) so angeordnet ist, dass er sich in den Rahmen (10) bewegt, den Gewinnungsmechanismus (8) bewegt und die Feder (9) des Gewinnungsmechanismus spannt,
wobei der Rahmen (10) zusätzlich einen federbelasteten Steuerkeil (6) und einen Haltehebel (12) umfasst, wobei der Steuerkeil (6) so angeordnet ist, dass er an der Gegenplatte (2) anliegt, wenn die Gewinnungseinheit (1) und die Gegenplatte (2) im Türrahmen und in der Tür installiert sind, und wenn die Tür gegen den Rahmen geschlossen ist, wobei beim Öffnen der Tür, wenn sich die Gewinnungseinheit (1) vom Rahmen wegbewegt, der Steuerkeil (6) so angeordnet ist, dass er sich aus dem Rahmen (10) herausbewegt und es dem Haltehebel (12) ermöglicht, in die Halteposition zu gelangen, in der der Haltehebel (12) so angeordnet ist, dass er den Rollriegel (3) in seiner in den Rahmen verschobenen Position hält, und beim Schließen der Tür ist der Steuerkeil (6) so ausgelegt, dass er sich unter Führung der Gegenplatte (2) in seine in den Rahmen verschobene Position bewegt, und als Reaktion auf die Bewegung des Steuerkeils (6) in den Rahmen ist der Haltehebel (12) so ausgelegt, dass er sich aus der Halteposition wegbewegt, wodurch sich der Rollriegel (3) aus dem Rahmen (10) herausbewegen kann,
wobei der Rahmen (10) zusätzlich einen Auslösemechanismus (13) umfasst, um die Spannung der Feder (9) zu lösen und damit auch den Gewinnungsmechanismus (8) zu bewegen, wobei die Auslösung des Auslösemechanismus (13) so ausgelegt ist, dass er als Reaktion auf die Bewegung des Rollriegels (3), des Steuerkeils (6) oder des Haltehebels (12) erfolgt, wenn die Tür geschlossen ist.

2. Energiegewinnungsanordnung nach Anspruch 1, **dadurch gekennzeichnet, dass** der Rollriegel (3) an einer Seite der Rollriegelkonstruktion oder an beiden Seiten eine abgeschrägte Oberfläche (29) aufweist.

3. Energiegewinnungsanordnung nach Anspruch 1 oder 2, **dadurch gekennzeichnet, dass** der Rollriegel eine bewegliche Oberfläche (20) aufweist, die bei montierter Energiegewinnungsanordnung am Gewinnungsmechanismus (8) anliegt und sich beim Öffnen der Tür in den Rahmen (10) hineinbewegt.

4. Energiegewinnungsanordnung nach Anspruch 3, **dadurch gekennzeichnet, dass** der Haltehebel eine Haltefläche (14) aufweist und der Rollriegel (3) eine Gegenhaltefläche (15) aufweist, wobei die Haltefläche in der Halteposition an der Gegenhaltefläche des Rollriegels anliegt.

5. Energiegewinnungsanordnung nach Anspruch 4, **dadurch gekennzeichnet, dass** der Freigabemechanismus (13) eine Sperroberfläche (23) und eine Freigabeoberfläche (24) aufweist, wobei die Sperroberfläche (23) so angeordnet ist, dass sie verhindert, dass sich der Gewinnungsmechanismus (8) bewegt und die durch das Öffnen der Tür gespannte Feder (9) des Gewinnungsmechanismus nachgibt, bevor sich der Freigabemechanismus als Reaktion auf die Bewegung des Rollriegels (3), Steuerkeils (6) oder des Haltehebels (12) bewegt, wobei diese Bewegung auf die Freigabeoberfläche (24) übertragen wird, wodurch sich die Sperrfläche (23) aus der Position entfernt, in der sie am Gewinnungsmechanismus (8) anliegt.

6. Energiegewinnungsanordnung nach einem der Ansprüche 3 bis 5, **dadurch gekennzeichnet, dass** der Gewinnungsmechanismus (8) zwei Hebel (9A, 9B) aufweist, von denen der erste Hebel (9A) so angeordnet ist, dass er dem in den Rahmen (10) der Gewinnungseinheit einfahrenden Rollriegel folgt, wodurch die Öffnungsbewegung der Tür durch den Rollriegel (3) gesteuert wird, um den Gewinnungsmechanismus zu bewegen und dessen Feder (9) zu spannen, und der zweite Hebel (9B) so angeordnet ist, dass er die in der Feder gespeicherte Energie freisetzt.

7. Energiegewinnungsanordnung nach Anspruch 1-6, **dadurch gekennzeichnet, dass** sie Mittel (27, 28) umfasst, um die gewonnene Energie in die Feder des Gewinnungsmechanismus zu leiten und von dort außerhalb der Energiegewinnungsanordnung entweder elektrisch oder mechanisch freizusetzen.

## Revendications

1. Système de récupération d'énergie destiné à récupérer l'énergie générée par le mouvement d'une porte, **caractérisé en ce qu'**il comprend une contre-plaque (2) destinée à être installée dans un cadre de porte et une unité de récupération (1) destinée à être installée dans une porte, laquelle contre-plaque (2) a une ouverture (5) et une surface biseautée (4) au niveau de l'ouverture, et laquelle unité de récupération (1) comprend un cadre (10), qui comprend un verrou à rouleau à ressort (3), et un mécanisme de récupération (8), qui a un ressort (9),
lequel verrou à rouleau (3) comprend un rouleau (11) qui est agencé de manière à venir en appui contre la surface biseautée (4) lorsque la contre-plaque (2) et l'unité de récupération (1) sont installées dans le cadre de porte et la porte, et lorsque la porte est fermée contre le cadre, moyennant quoi, lors de l'ouverture de la porte, le rouleau (11) est agencé pour se déplacer sur la surface biseautée (4) et, simultanément, le verrou à rouleau (3) est agencé pour se déplacer dans le cadre (10) et déplacer le mécanisme de récupération (8) et armer le ressort (9) du mécanisme de récupération,
lequel cadre (10) comprend en outre une cale de commande à ressort (6) et un levier de retenue (12), laquelle cale de commande (6) est agencée de manière à venir en appui contre la contre-plaque (2) lorsque l'unité de récupération (1) et la contre-plaque (2) sont installées dans le cadre de porte et la porte, et lorsque la porte est fermée contre le cadre, moyennant quoi, lors de l'ouverture de la porte, à mesure que l'unité de récupération (1) s'éloigne du cadre, la cale de commande (6) est agencée pour sortir du cadre (10) et permettre au levier de retenue (12) de se déplacer vers la position de retenue, position dans laquelle le levier de retenue (12) est agencé pour maintenir le verrou à rouleau (3) dans sa position enfoncée dans le cadre, et lors de la fermeture de la porte, la cale de commande (6) est agencée pour se déplacer vers sa position enfoncée dans le cadre, telle que guidée par la contre-plaque (2), et en réponse au déplacement de la cale de commande (6) dans le cadre, le levier de retenue (12) est agencé pour s'éloigner de la position de retenue, permettant au verrou à rouleau (3) de sortir du cadre (10),
lequel cadre (10) comprend en outre un mécanisme de libération (13) destiné à libérer le ressort (9) et, de ce fait, à déplacer également le mécanisme de récupération (8), ladite libération du mécanisme de libération (13) est agencée pour se produire en réponse au mouvement du verrou à rouleau (3), de la cale de commande (6) ou du levier de retenue (12), lorsque la porte est fermée.

2. Agencement de récupération d'énergie selon la revendication 1, **caractérisé en ce que** le verrou à rouleau (3) a une surface biseautée (29) sur un côté de la structure du verrou à rouleau, ou sur les deux côtés.

3. Agencement de récupération d'énergie selon la revendication 1 ou 2, **caractérisé en ce que** le verrou à rouleau a une surface mobile (20) qui vient en appui contre le mécanisme de récupération d'énergie (8) lorsque l'agencement de récupération d'énergie est installé et que le verrou à rouleau pénètre dans le cadre (10) lorsque la porte est ouverte.

4. Agencement de récupération d'énergie selon la revendication 3, **caractérisé en ce que** le levier de retenue a une surface de retenue (14) et que le verrou à rouleau (3) a une surface de contre-retenue (15), laquelle surface de retenue, en position de retenue, est en appui contre la surface de contre-retenue du verrou à rouleau.

5. Agencement de récupération d'énergie selon la revendication 4, **caractérisé en ce que** le mécanisme de libération (13) a une surface de blocage (23) et une surface de libération (24), ladite surface de blocage (23) est agencée pour empêcher le mécanisme de récupération (8) de se déplacer et le ressort 9 du mécanisme de récupération, armé par l'ouverture de la porte, de se libérer, avant que le mécanisme de libération ne se déplace en réponse au mouvement du verrou à rouleau 3, de la cale de commande 6 ou du levier de retenue 12, lequel mouvement est transmis à la surface de libération 24, moyennant quoi la surface de blocage 23 s'éloigne de la position où elle est en appui contre le mécanisme de récupération 8.

6. Agencement de récupération d'énergie selon l'une quelconque des revendications 3-5, **caractérisé en ce que** le mécanisme de récupération (8) a deux leviers (9A, 9B), dont le premier levier (9A) est agencé pour suivre le verrou à rouleau se déplaçant dans le cadre (10) de l'unité de récupération, moyennant quoi le mouvement d'ouverture de la porte est commandé par le verrou à rouleau (3) pour déplacer le mécanisme de récupération et armer son ressort (9), et le second levier (9B) est agencé pour libérer l'énergie récupérée dans le ressort.

7. Agencement de récupération d'énergie selon les revendications 1 - 6, **caractérisé en ce qu'**il comprend des moyens (27, 28) destinés à transférer l'énergie récupérée vers le ressort du mécanisme de récupération et à la libérer de celui-ci à l'extérieur de l'agencement de récupération d'énergie, soit par voie électrique, soit par voie mécanique.
